# FASCICULE DE BREVET EUROPEEN

(11) **EP 2 970 011 B1**
(45) Date de publication et mention de la délivrance du brevet: **14.12.2016**
(21) Numéro de dépôt: 14709635.8
(22) Date de dépôt: 11.03.2014
(51) Int. Cl.: G21F 9/30, G21F 9/36, C04B 28/34, C04B 40/00

(54) **LIANT ET SON UTILISATION POUR LE CONDITIONNEMENT DE DÉCHETS CONTENANT DE L'ALUMINIUM MÉTALLIQUE**
BINDEMITTEL UND VERWENDUNG DAVON ZUR KONDITIONIERUNG VON ALUMINIUMMETALLHALTIGEM ABFALL
BINDER AND THE USE THEREOF FOR CONDITIONING WASTE CONTAINING ALUMINIUM METAL

(30) Priorité: 13.03.2013 FR 1352233
(43) Date de publication de la demande: 20.01.2016
(73) Titulaire: Commissariat à l'Énergie Atomique et aux Énergies Alternatives, 75015 Paris (FR)
(72) Inventeur: CAU DIT COUMES, Céline, F-30126 Tavel (FR); LAMBERTIN, David, F-84860 Caderousse (FR); ANTONUCCI, Pascal, F-30840 Meynes (FR); CHARLOT, Maryline, F-30330 Gaujac (FR)
(74) Mandataire: Brevalex
(86) Numéro de dépôt international: PCT/EP2014/054712
(87) Numéro de publication internationale: WO 2014/140018

(56) Documents cités:
- WO-A1-2009/068452
- WO-A1-2009/120629
- WO-A2-2004/075207
- CN-A- 101 407 400
- US-A- 2 795 510
- US-A- 5 037 479
- US-A- 5 242 488
- US-A- 5 931 773

## Description

### DOMAINE TECHNIQUE

La présente invention appartient au domaine du conditionnement des déchets nucléaires et, plus particulièrement, au domaine du conditionnement par immobilisation de déchets contenant de l'aluminium métallique.

La présente invention propose une composition de liant et notamment de ciment, mortier ou béton, son procédé de préparation et son utilisation pour confiner des déchets contenant de l'aluminium métallique en colis destinés à être stockés dans un centre de stockage de déchets nucléaires.

### ÉTAT DE LA TECHNIQUE ANTÉRIEURE

Le démantèlement d'anciennes installations nucléaires a, ou va générer, des déchets radioactifs dont certains contiennent de l'aluminium métallique. Ces déchets doivent être conditionnés avant leur stockage définitif, c'est-à-dire placés sous une forme stable, monolithique et confinante.

Le ciment Portland du type silico-calcique est largement utilisé pour le conditionnement des déchets de faible et moyenne activité. Le génie civil a révélé et mis à profit ses qualités intrinsèques : disponibilité, coût modeste, simplicité de mise en oeuvre, bonne résistance mécanique et, en général, stabilité dans le temps. Le domaine des déchets radioactifs tire aussi avantage de sa basicité après durcissement, qui permet d'insolubiliser un grand nombre de radionucléides. Cette basicité constitue en revanche un obstacle pour le conditionnement de l'aluminium.

En effet, l'aluminium s'oxyde avec production de dihydrogène lorsqu'il est mis en contact avec la solution de gâchage. La passivation du métal par dépôt superficiel d'alumine ne se produit en effet que pour des pH compris entre 3 et 9. En milieu plus acide (Eq. 1) ou plus basique (cas du ciment Portland - Eq. 2), l'alumine est soluble et la corrosion du métal se poursuit jusqu'à épuisement des réactifs. Le dégagement d'hydrogène qui en résulte serait néfaste pour la sûreté du stockage des déchets conditionnés.

2Al+6H⁺→2Al³⁺+3H₂ (Eq.1)

2Al+2OH⁻+2H₂O→2AlO₂⁻+3H₂ (Eq.2)

C'est la raison pour laquelle la quantité d'aluminium acceptable dans les déchets cimentés est actuellement très faible. A titre d'exemple, la surface maximale incorporable dans des colis cimentés de 330 L stockés sur le centre de l'Aube est de 0,1m² (spécification de l'Agence Nationale pour la gestion des Déchets RAdioactifs (ANDRA) ACO.SP.ASRE.99.001).

En remplacement des ciments silico-calciques conventionnels, trois types de liants minéraux ont été étudiés pour le conditionnement de déchets contenant de l'aluminium métallique : (1) les ciments ettringitiques, (2) les ciments phosphomagnésiens et (3) les ciments silico-magnésiens.

Les ciments ettringitiques ont pour caractéristique commune de former par hydratation de l'ettringite (3CaO.Al₂O₃.3CaSO₄.32H₂O) en quantité importante. Ils peuvent être obtenus par mélange d'un ciment alumineux avec une source de sulfate de calcium, ou à partir d'un ciment sulfo-alumineux riche en ye'elimite.

Il a été montré que la corrosion de barreaux d'aluminium est significativement réduite dans une pâte de ciment sulfo-alumineux en comparaison de celle observée avec un ciment Portland **[1-2].** Deux explications complémentaires ont été avancées :
1) le pH de la solution interstitielle d'une pâte de ciment sulfo-alumineux (compris entre 10 et 11 tant que l'assemblage minéralogique contient du gypse) est inférieur à celui d'une pâte de ciment Portland (supérieur à 13), ce qui diminue la vitesse de corrosion de l'aluminium ;
2) la demande chimique en eau du liant sulfo-alumineux (quantité d'eau nécessaire pour hydrater en totalité les phases anhydres du ciment), qui augmente avec sa teneur initiale en gypse, est supérieure à celle du ciment Portland **[3].** En conséquence, la quantité d'eau résiduelle dans une pâte de ciment sulfo-alumineux ayant atteint un degré d'hydratation avancé est réduite, et la corrosion de l'aluminium à long terme est ainsi limitée.

Récemment, un liant ettringitique obtenu par mélange de ciment Fondu et de plâtre a été utilisé dans le cadre d'un projet de démantèlement sur le site de Savannah River aux Etats-Unis **[4].** Un coulis d'injection destiné à l'inertage d'une cuve de réacteur contenant des internes en aluminium a été formulé. Les auteurs font état d'un pH d'équilibre du matériau hydraté de 9,5 et d'un dégagement d'hydrogène par corrosion de l'aluminium très limité. Environ 92 m³ de matériau ont été mis en oeuvre à la fin de l'année 2010.

Plusieurs réserves doivent néanmoins être apportées. Tout d'abord, les mesures de dégagement d'hydrogène résultant de la corrosion de l'aluminium ont été conduites sur des durées relativement courtes (jusqu'à 40 j) et restent à valider à plus long terme. De plus, les liants ettringitiques présentent un pH de solution interstitielle réduit par rapport au ciment Portland, mais qui reste hors de la zone de passivation de l'aluminium (3-9). Dans le cas des ciments sulfo-alumineux, le pH de la solution porale, initialement compris entre 10 et 11, augmente même d'une unité après épuisement du gypse, ce qui devrait accroître la corrosion de l'aluminium. Par conséquent, même si l'hydratation conduit à une auto-dessiccation du matériau, une reprise de la corrosion de l'aluminium ne peut être exclue à long terme en cas de re-saturation de la porosité par de l'eau.

Un ciment phosphomagnésien est composé d'oxyde de magnésium calciné à haute température (de type hardburnt ou deadburnt) et d'un sel de phosphate acide soluble dans l'eau, qui est le plus souvent le monohydrogénophosphate de diammonium. L'oxyde de magnésium est disponible sous forme pulvérulente, tandis que le sel de phosphate peut être soit dissous dans l'eau de gâchage, soit mélangé à sec avec l'oxyde de magnésium. Dans ce dernier cas, la mise en oeuvre du ciment phosphomagnésien est identique à celle du ciment Portland (mélange du ciment avec de l'eau).

Lorsqu'un sel d'ammonium est utilisé, le principal produit formé, responsable de la prise et du durcissement, est la struvite NH₄MgPO₄.6H₂O **[5]** selon l'équation 3 :

MgO + (NH₄)₂HPO₄+5H₂O→NH₄MgPO₄.6H₂O+NH₃ (Eq. 3)

Des produits secondaires peuvent également être observés, comme la dittmarite (NH₄MgPO₄.H₂O), la schertelite ((NH₄)₂Mg(HPO₄)₂.4H₂O) la newberite (MgHPO₄.3H₂O) et le phosphate de magnésium Mg₃(PO₄)₂.4H₂O. Une phase amorphe ou mal cristallisée peut également précipiter dans des mélanges très peu dosés en eau **[6].**

La réaction de l'oxyde de magnésium avec le monohydrogénophosphate de diammonium présente l'inconvénient de produire de l'ammoniac. Ce dégagement de gaz toxique peut être évité en utilisant un sel de phosphate alcalin (comme NaH₂PO₄, KH₂PO₄, Na₂HPO₄, K₂HPO₄) au lieu du phosphate d'ammonium **[7].** La contrepartie est un affaiblissement des résistances mécaniques du matériau durci.

Au Laboratoire National d'Argonne aux Etats-Unis, un matériau dénommé Ceramicrete a été développé pour conditionner des déchets sans filière **[8-13].** Il est préparé par réaction entre de l'oxyde de magnésium et du dihydrogénophosphate de potassium (KH₂PO₄), qui conduit à la formation de la phase hydratée MgKPO₄.6H₂O (MKP) conformément à l'équation (4) ci-après :

MgO+KH₂PO₄+5H₂O→MgKPO₄.6H₂O (Eq. 4)

La solution de KH₂PO₄, de pH voisin de 4, présente une acidité modérée qui facilite sa mise en oeuvre. La réaction est très exothermique. Lors de la préparation de volumes importants de matériau, un phénomène autocatalytique est observé : la chaleur produite augmente la température de la pâte, ce qui accélère encore la réaction, si bien que des prises éclair, en quelques minutes, peuvent être observées. Un retardateur de prise tel que l'acide borique ou l'acide citrique (dosage typique de 1 à 2% de la masse du liant) doit alors être ajouté pour contrôler la prise et limiter l'échauffement.

Le ciment phosphomagnésien préparé à partir de MgO et de KH₂PO₄ dans des proportions définies par la réaction (Eq. 4) possède une demande chimique en eau (eau nécessaire pour hydrater en totalité le liant) correspondant à un rapport E/C de 0,51 (où C désigne la masse de MgO+KH₂PO₄). Un tel rapport permet d'obtenir une pâte fluide après malaxage. Au contraire du ciment Portland, il n'est donc pas nécessaire de surdoser l'eau par rapport à la demande chimique pour obtenir une bonne ouvrabilité. En conséquence, le volume de solution interstitielle résiduelle dans un liant phosphomagnésien après réaction est en général très faible.

A noter qu'il est envisagé d'ajouter du borate ou de l'acide borique pour contrôler le taux de réaction lors de la stabilisation, dans un ciment phosphomagnésien, d'un matériel nucléaire comprenant des oxydes ou des halogénures d'actinides et/ou de transuraniens et/ou des hydrocarbures et/ou des acides contaminés par des actinides et/ou des transuraniens **[8-13].**

Après réaction, une pâte de ciment phosphomagnésien présente une résistance à la compression typiquement comprise entre 20 et 30 MPa, une densité de l'ordre de 1,8 g/cm³, une faible porosité ouverte (de l'ordre de 10 à 15% en volume), et un pH d'équilibre compris entre 6 et 8 **[14],** situé dans le domaine de passivation de l'aluminium.

C'est la raison pour laquelle un ciment phosphomagnésien a également été sélectionné comme candidat possible pour inerter la cuve de réacteur contenant des internes en aluminium dans le projet de démantèlement mené sur le site de Savannah River **[15].** Une formulation de type mortier injectable a été mise au point. Elle n'a finalement pas été utilisée pour l'application visée.

Enfin, il est à noter que les ciments phosphomagnésiens font également l'objet d'études en Grande Bretagne (collaboration entre Amec Nuclear UK et le laboratoire ISM (Immobilisation Science Laboratory) de l'Université de Sheffield) pour le conditionnement de déchets MAGNOX contenant de l'uranium métallique **[16].** Comme dans le cas de l'aluminium, ces liants pourraient permettre de limiter la corrosion de l'uranium par l'eau de gâchage.

Deux études récentes font état du développement d'un mortier à base de ciment silico-magnésien pour le blocage de métaux électropositifs comme le magnésium ou l'aluminium **[17].** Le matériau est préparé à partir d'oxyde de magnésium, de carbonate de magnésium, de fumée de silice et de sable siliceux. Après durcissement, il comporte une phase de type M-S-H (hydrosilicate de magnésium), associée à de la brucite ou à de la fumée de silice résiduelle selon les proportions des différents réactifs. Le pH de sa solution interstitielle est voisin de 10, ce qui permet de réduire considérablement la production d'hydrogène lors de l'enrobage d'un barreau d'aluminium.

Une alternative au changement de la chimie du liant consiste à conserver un ciment silico-calcique, mais à y adjoindre un inhibiteur de corrosion de l'aluminium. En 1995, une étude japonaise a montré que la corrosion de l'aluminium dans un matériau à base de ciment Portland peut être fortement réduite par ajout de nitrate de lithium [18]. Selon les auteurs, l'effet bénéfique du lithium résulterait de la formation d'un film insoluble de LiH(AlO₂)₂.5H₂O à la surface du métal. La stabilité dans le temps de cette couche de passivation reste inconnue.

De plus, dans le procédé de stabilisation décrit dans **[10],** il est envisagé, pour diminuer le caractère exothermique de la réaction lors de la préparation du ciment phosphomagnésien, d'ajouter un carbonate d'un métal monovalent choisi parmi le potassium, le sodium et le lithium (équation 2 décrite dans **[10])** ou du dihydrogénophosphate de lithium (équation 3 décrite dans **[10]).** Toutefois, même si de l'acide borique peut être utilisé comme retardateur de prise, aucune des formulations exemplifiées ne comprend cet acide associé à du carbonate de lithium ou à du dihydrogénophosphate de lithium.

Les inventeurs se sont fixés pour but de proposer un matériau utile pour le conditionnement de déchets contenant de l'aluminium métallique seul ou sous forme d'alliage, ledit matériau ne présentant pas les inconvénients des matériaux de l'art antérieur et/ou présentant des propriétés améliorées et notamment en terme de compatibilité avec l'aluminium métallique.

### EXPOSÉ DE L'INVENTION

La présente invention permet d'atteindre le but que se sont fixé les inventeurs et fournit donc une formulation cimentaire destinée à l'inertage de déchets contenant de l'aluminium métallique sous forme pure ou alliée, et qui satisfait, lorsque ladite formulation se présente sous forme de mortier, aux contraintes suivantes :
- la production d'hydrogène par corrosion de l'aluminium dans la matrice cimentaire est réduite par rapport aux solutions existantes ;
- la réactivité du liant est maîtrisée, avec un début de prise Vicat supérieur à 3 h, et une fin de prise Vicat inférieure à 24 h ;
- le matériau présente après malaxage une fluidité suffisante pour permettre un écoulement au travers d'un cône de Marsh muni d'un ajustage 12,5 mm ;
- le matériau ne présente aucun ressuage 24 h après la prise ;
- l'auto-échauffement du liant pendant son durcissement n'engendre pas de dégradation du matériau du type, par exemple, fissuration ou création d'une macroporosité par suite de la vaporisation de l'eau de gâchage ;
- le matériau développe une résistance à la compression supérieure à 20 MPa après 90 j de cure sous eau à température ambiante ;
- le matériau durci ne présente pas d'expansion ou de retrait susceptible d'affecter son intégrité (par suite de fissurations) lorsqu'il est conservé à température ambiante sous eau ou sous air ; et
- le matériau possède un pH de solution interstitielle compris entre 5 et 9.

Ces objectifs sont atteints par l'utilisation d'un mélange adapté d'un ciment phosphomagnésien, d'une source de bore, d'un sel de lithium, d'un filler, d'eau et éventuellement d'un sable et/ou de graviers.

En effet, les travaux des inventeurs ont permis de montrer que, de façon inattendue, l'ajout simultané d'une source de lithium et d'une source de bore à un ciment phosphomagnésien conduit à des synergies intéressantes pour l'application visée :
- la corrosion de l'aluminium, et la production d'hydrogène qui en résulte, sont significativement réduites par rapport aux solutions existantes (voir exemple 1) ; et
- l'effet retardateur de la source de bore est renforcé par le sel de lithium, alors que si ce dernier composé est utilisé seul, il n'a pas d'influence significative sur la prise du ciment (voir exemple 3).

C'est donc par l'association du ciment phosphomagnésien, de la source de bore et d'un sel de lithium que la présente invention se démarque des travaux antérieurs. Par conséquent, la présente invention concerne une composition de liant comprenant :
(i) un ciment phosphomagnésien ;
(ii) une source de bore ;
(iii) un sel de lithium ; et
(iv) de l'eau.

Dans le cadre de la présente invention, les caractéristiques remarquables de cette composition peuvent être exploitées que cette composition se présente sous forme d'un coulis, d'un mortier ou d'un béton.

Le ciment phosphomagnésien utilisable pour la présente invention peut être tout ciment phosphomagnésien connu de l'homme du métier. Avantageusement, le ciment phosphomagnésien mis en oeuvre dans le cadre de l'invention est constitué d'une source de magnésium à l'état oxydé et d'une source de phosphate.

Par « source de magnésium à l'état oxydé », on entend un composé comprenant du magnésium à un état d'oxydation de +II ou un précurseur de celui-ci. Toute source de magnésium à l'état oxydé connue de l'homme du métier est utilisable dans le cadre de la présente invention. Avantageusement, cette source de magnésium à l'état oxydé est choisie dans le groupe constitué par l'oxyde de magnésium (MgO), l'hydroxyde de magnésium (Mg(OH)₂), le carbonate de magnésium (MgCO₃), l'hydroxycarbonate de magnésium (4MgCO₃.Mg(OH)₂.5H₂O), le chlorure de magnésium (MgCl₂), le bromure de magnésium (MgBr₂) ou un de leurs mélanges. En particulier, cette source de magnésium à l'état oxydé est choisie dans le groupe constitué par l'oxyde de magnésium (MgO), l'hydroxyde de magnésium (Mg(OH)₂), le carbonate de magnésium (MgCO₃), l'hydroxycarbonate de magnésium (4MgCO₃.Mg(OH)₂.5H₂O) ou un de leurs mélanges.

Lorsque de l'oxyde de magnésium est utilisé en tant que source de magnésium à l'état oxydé dans la composition selon l'invention, l'oxyde de magnésium se présente sous forme d'un oxyde de magnésium obtenu par calcination à haute température. Avantageusement, un tel oxyde de magnésium est obtenu par calcination de carbonate de magnésium ou d'une saumure riche en magnésium à une température comprise entre 1000°C et 1500°C et notamment entre 1100°C et 1400°C, pendant une durée comprise entre 15 min et 4 h, notamment entre 30 min et 3 h et, en particulier, de l'ordre de 1 h (i.e. 1 h ± 15 min).

Dans le cadre de la présente invention, la source de magnésium à l'état oxydé peut être utilisée sous une forme pure (i.e. pureté exprimée en masse supérieure à 90% et notamment à 95%). En variante, la source de magnésium à l'état oxydé peut comprendre au moins un autre élément, typiquement choisi dans le groupe constitué par le calcium, le silicium, l'aluminium ou le fer, ces éléments se trouvant en général sous forme d'oxyde ou d'hydroxyde.

La source de magnésium à l'état oxydé utilisée dans le cadre de la présente invention se présente typiquement sous forme pulvérulente. Avantageusement, cette poudre présente une surface spécifique, déterminée par la méthode BET (pour « Brunauer, Emett et Teller » - adsorption d'azote) en utilisant l'appareil Micromeritics ASAP 2020, inférieure à 4 m²/g, notamment inférieure à 2 m²/g et, en particulier, inférieure à 1 m²/g. A titre d'exemple, l'oxyde de magnésium utilisé dans la partie expérimentale ci-après à savoir Magchem^{®} 10CR présente une surface spécifique de 0,9 m²/g.

De plus, cette poudre présente, lorsque mise en oeuvre dans la composition selon l'invention, une granulométrie inférieure à 500 µm, et notamment inférieure à 100 µm. A noter que l'obtention d'une telle granulométrie peut nécessiter une étape de broyage préalablement à la mise en oeuvre dans la composition selon l'invention. A titre d'exemple, 10% des particules de l'oxyde de magnésium utilisé dans la partie expérimentale ci-après, à savoir Magchem 10CR, possèdent un diamètre inférieur à 5 µm, 50% un diamètre inférieur à 19 µm, et 90% un diamètre inférieur à 46 µm.

Par « source de phosphate », on entend un composé comprenant du phosphate ou un précurseur de celui-ci. Avantageusement, la source de phosphate mise en oeuvre dans le cadre de la présente invention est choisie dans le groupe constitué par l'acide phosphorique, l'acide orthophosphorique, l'acide pyrophosphorique, l'acide polyphosphorique, le phosphate d'aluminium, le phosphate de calcium, le phosphate de magnésium, le phosphate d'un métal alcalin, le monohydrogénophosphate d'aluminium, le monohydrogénophosphate de calcium, le monohydrogénophosphate de magnésium, le monohydrogénophosphate d'un métal alcalin, le dihydrogénophosphate d'aluminium, le dihydrogénophosphate de calcium, le dihydrogénophosphate de magnésium, le dihydrogénophosphate d'un métal alcalin, l'orthophosphate d'aluminium, l'orthophosphate de calcium, l'orthophosphate de magnésium, l'orthophosphate d'un métal alcalin, le pyrophosphate d'aluminium, le pyrophosphate de calcium, le pyrophosphate de magnésium, le pyrophosphate d'un métal alcalin, le polyphosphate d'aluminium, le polyphosphate de calcium, le polyphosphate de magnésium, le polyphosphate d'un métal alcalin, le tripolyphosphate d'aluminium, le tripolyphosphate de calcium, le tripolyphosphate de magnésium, le tripolyphosphate d'un métal alcalin, le tétrapolyphosphate d'aluminium, le tétrapolyphosphate de calcium, le tétrapolyphosphate de magnésium, le tétrapolyphosphate d'un métal alcalin ou un de leurs mélanges. Par « métal alcalin », on entend un élément de la première colonne du tableau périodique des éléments à l'exception de l'hydrogène et, en particulier, un élément choisi dans le groupe constitué par le lithium, le sodium, le potassium, le rubidium et le césium. A noter que, le phosphate ammoniacal, le phosphate di-ammoniacal ainsi que leurs dérivés tels que monohydrogénophosphate, dihydrogénophosphate, orthophosphate, polyphosphate, tripolyphosphate et tétrapolyphosphate ammoniacaux ou di-ammoniacaux sont également utilisables dans le cadre de la présente invention.

La source de phosphate mise en oeuvre dans le cadre de la présente invention est, plus particulièrement, choisie dans le groupe constitué par l'acide phosphorique, le phosphate d'aluminium, le phosphate de sodium, le phosphate de potassium, le monohydrogénophosphate d'aluminium, le monohydrogénophosphate de sodium, le monohydrogénophosphate de potassium, le dihydrogénophosphate d'aluminium, le dihydrogénophosphate de sodium, le dihydrogénophosphate de potassium ou un de leurs mélanges.

La source de phosphate mise en oeuvre dans le cadre de la présente invention peut se présenter sous forme liquide ou solide. Lorsqu'elle est sous forme solide, elle se présente typiquement sous forme pulvérulente. A noter que la source de phosphate est soluble dans l'eau de gâchage du liant selon l'invention.

La source de bore utilisable dans le cadre de la composition de liant selon l'invention peut être une quelconque source de bore connue de l'homme du métier et, en particulier, une source de bore habituellement utilisée comme retardateurs de prise dans le domaine des liants phosphomagnésiens.

Avantageusement, la source de bore utilisable dans le cadre de la composition de liant selon l'invention est choisie dans le groupe constitué par l'acide borique, l'acide métaborique, le borax, un sel de borate, un sel de monohydrogénoborate, un sel de dihydrogénoborate, un sel de métaborate, un sel de polyborate ou un de leurs mélanges. Les sels envisagés sont, en particulier, un borate d'un métal alcalin, un monohydrogénoborate d'un métal alcalin, un dihydrogénoborate d'un métal alcalin, un métaborate d'un métal alcalin, un polyborate d'un métal alcalin ou un de leurs mélanges. Les métaux alcalins envisagés pour la source de bore sont identiques à ceux envisagés pour la source de phosphate.

La source de bore mise en oeuvre dans le cadre de la présente invention est, plus particulièrement, choisie dans le groupe constitué par l'acide borique, le borate de césium, le borate de rubidium, le borate de potassium, le borate de sodium, le borate de lithium, le monohydrogénoborate de césium, le monohydrogénoborate de rubidium, le monohydrogénoborate de potassium, le monohydrogénoborate de sodium, le monohydrogénoborate de lithium, le dihydrogénoborate de césium, le dihydrogénoborate de rubidium, le dihydrogénoborate de potassium, le dihydrogénoborate de sodium, le dihydrogénoborate de lithium, le métaborate de césium, le métaborate de rubidium, le métaborate de potassium, le métaborate de sodium, le métaborate de lithium, le polyborate de césium, le polyborate de rubidium, le polyborate de potassium, le polyborate de sodium, le polyborate de lithium ou un de leurs mélanges. Plus particulièrement, la source de bore mise en oeuvre dans la composition de liant selon l'invention est de l'acide borique.

La source de bore mise en oeuvre dans le cadre de la présente invention peut se présenter sous forme liquide ou solide. Lorsqu'elle est sous forme solide, elle se présente typiquement sous forme pulvérulente. A noter que, avantageusement, la source de bore est soluble dans l'eau de gâchage du liant selon l'invention.

La composition selon l'invention comprend également un sel de lithium. Tout sel de lithium connu de l'homme du métier est utilisable dans le cadre de la présente invention. Avantageusement, un tel sel de lithium est choisi dans le groupe constitué par le nitrate de lithium, le carbonate de lithium, le sulfate de lithium, le phosphate de lithium, le triazole de lithium, le borate de lithium, le monohydrogénoborate de lithium, le dihydrogénoborate de lithium, le métaborate de lithium, le polyborate de lithium ou un de leurs mélanges. En particulier, le sel de lithium mis en oeuvre dans le cadre de la présente invention est choisi dans le groupe constitué par le nitrate de lithium, le carbonate de lithium, le sulfate de lithium, le phosphate de lithium ou un de leurs mélanges. Plus particulièrement, le sel de lithium mis en oeuvre dans la composition de liant selon l'invention est du nitrate de lithium.

A noter que le borate de lithium, le monohydrogénoborate de lithium, le dihydrogénoborate de lithium, le métaborate de lithium et le polyborate de lithium sont des composés utilisables non seulement en tant que sel de lithium mais aussi en tant que source de bore. En d'autres termes, dans les compositions de liant selon l'invention comprenant du borate de lithium, du monohydrogénoborate de lithium, du dihydrogénoborate de lithium, du métaborate de lithium et du polyborate de lithium, la source de bore est un sel de lithium.

Le sel de lithium mis en oeuvre dans le cadre de la présente invention peut se présenter sous forme liquide ou solide. Lorsqu'il est sous forme solide, il se présente typiquement sous forme pulvérulente. A noter que le sel de lithium mis en oeuvre est, avantageusement, soluble dans l'eau de gâchage du liant selon l'invention.

Avantageusement, dans la composition de liant selon la présente invention, les proportions de ciment phosphomagnésien (notamment source de magnésium à l'état oxydé + source de phosphate), de source de bore, de sel de lithium et d'eau sont telles qu'elles satisfont au moins l'un quelconque des rapports molaires ci-après et, en particulier, tous ces rapports molaires :
- le rapport molaire entre les éléments Mg et P est compris entre 0,5 et 1,5 et, notamment, compris entre 0,8 et 1 ;
- le rapport molaire entre les éléments B et Mg est compris entre 0,03 et 0,3 et, notamment, compris entre 0,05 et 0,15 ;
- le rapport molaire entre les éléments Li et Mg compris entre 0,02 et 0,12 et, notamment, compris entre 0,05 et 0,10, et
- le rapport molaire entre l'eau et l'élément Mg compris entre 4 et 7 et, notamment, compris entre 5 et 6.

La composition selon l'invention peut également comprendre un filler. Pour rappel, les fillers également appelées « fines » ou « fines d'addition » sont un produit sec, finement divisé, issu de la taille, du sciage ou du travail de roches naturelles, de granulats, des pierres ornementales ou de minéraux calcinés ou issu de matériaux de substitution, principalement des sous-produits calcinés ou résidus d'exploitation industrielle. Dans la composition selon l'invention, le filler est utilisé pour diluer les autres éléments de la composition, pour améliorer la résistance mécanique du liant obtenu, pour améliorer l'ouvrabilité du matériau frais et/ou pour réduire le risque de ressuage.

Avantageusement, le filler mis en oeuvre dans la composition selon l'invention présente une dimension moyenne des grains notamment comprise entre 1 et 200 µm et notamment entre 5 et 100 µm.

Le filler utilisé dans la composition selon l'invention peut être tout type de filler habituellement utilisé dans le domaine des mortiers, ciments et bétons. Avantageusement, le filler de la composition selon l'invention est un filler siliceux et notamment alumino-siliceux. Un tel filler est, plus particulièrement, un filler, naturel ou artificiel, issu de pouzzolane, d'illite, d'opaline, de cherts, de cendres volcaniques, de pierre ponce, d'argiles schisteuses, de terres à diatomées calcinées, d'argile cuite, de fumée de silice ou de cendres volantes. En particulier, les cendres volantes utilisables comme filler dans la composition selon la présente invention sont des cendres volantes alumino-siliceuses, typiquement issues de la combustion de charbons bitumineux.

Dans la composition de liant selon la présente invention, la quantité de filler est telle que le rapport massique entre le filler et le ciment phosphomagnésien (source de magnésium + source de phosphate) est compris entre 0,5 et 1,5 et, notamment, compris entre 0,8 et 1,2.

La composition selon l'invention peut en outre comprendre du sable et, éventuellement, des granulats.

Le sable utilisé dans la composition selon l'invention peut être tout type de sable habituellement utilisé dans le domaine des mortiers, ciments et bétons. Avantageusement, il s'agit d'un sable siliceux qui permet d'atteindre les meilleurs résultats en ce qui concerne l'optimisation des propriétés physiques et mécaniques du liant obtenu. Par « sable siliceux », on entend, dans le cadre de la présente invention, un sable constitué à plus de 90%, notamment à plus de 95%, en particulier à plus de 98% et, plus particulièrement, à plus de 99% de silice (SiO₂). Le sable siliceux mis en oeuvre dans la présente invention présente avantageusement une dimension moyenne des grains notamment inférieure à 10 mm, notamment inférieure à 7 mm et, en particulier, inférieure à 4 mm. A titre d'exemple particulier, on peut utiliser un sable siliceux présentant une dimension moyenne des grains comprise entre 0,1 et 2 mm.

Par « granulat », on entend un matériau granulaire, naturel, artificiel ou recyclé dont la dimension moyenne des grains est avantageusement comprise entre 10 et 125 mm. Le granulat éventuellement ajouté à la composition selon la présente invention peut être un granulat siliceux.

Lorsque la composition de liant selon l'invention comprend du sable, le rapport massique entre le sable et le ciment phosphomagnésien (source de magnésium + source de phosphate) est avantageusement compris entre 0,5 et 3 et, notamment, compris entre 1 et 1,5.

Dans une 1^{ère} forme de mise en oeuvre, la composition de liant selon la présente invention comprend :
(i) un ciment phosphomagnésien notamment tel que précédemment défini ;
(ii) une source de bore notamment telle que précédemment définie ;
(iii) un sel de lithium notamment tel que précédemment défini ;
(iv) un filler notamment tel que précédemment défini ; et
(v) de l'eau.

La composition de liant selon cette 1^{ère} forme de mise en oeuvre comprend essentiellement les 5 éléments précités et, de façon avantageuse, est constituée par ces éléments i.e. la composition selon l'invention ne comprend aucun autre élément que les 5 éléments précités. Dans ce cas, le liant est un coulis.

Un exemple particulier de composition selon cette 1^{ère} forme de mise en oeuvre est une composition de coulis constituée par :
(i) un ciment phosphomagnésien constitué par de l'oxyde de magnésium calciné entre 1000 et 1500°C, avec une surface spécifique inférieure à 1 m²/g et du dihydrogénophosphate de potassium ;
(ii) de l'acide borique ;
(iii) du nitrate de lithium ;
(iv) un filler composé de cendres volantes alumino-siliceuses ; et
(v) de l'eau.

Dans une 2^{nde} forme de mise en oeuvre, la composition de liant selon la présente invention comprend :
(i) un ciment phosphomagnésien notamment tel que précédemment défini ;
(ii) une source de bore notamment telle que précédemment définie ;
(iii) un sel de lithium notamment tel que précédemment défini ;
(iv) un filler notamment tel que précédemment défini ;
(v) de l'eau ; et
(vi) du sable notamment tel que précédemment défini.

La composition de liant selon cette 2^{nde} forme de mise en oeuvre comprend essentiellement les 6 éléments pré-cités et, de façon avantageuse, est constituée par ces éléments i.e. la composition selon l'invention ne comprend aucun autre élément que les 6 éléments pré-cités. Dans ce cas, le liant est un mortier.

Un exemple particulier de composition selon cette 2^{nde} forme de mise en oeuvre est une composition de mortier constituée par :
(i) un ciment phosphomagnésien constitué par de l'oxyde de magnésium calciné entre 1000 et 1500°C, avec une surface spécifique inférieure à 1 m²/g et du dihydrogénophosphate de potassium ;
(ii) de l'acide borique ;
(iii) du nitrate de lithium ;
(iv) un filler composé de cendres volantes alumino-siliceuses ;
(v) de l'eau ; et
(vi) du sable siliceux de granulométrie inférieure à 2 mm.

Dans une 3^{ème} forme de mise en oeuvre, la composition de liant selon la présente invention comprend :
(i) un ciment phosphomagnésien notamment tel que précédemment défini ;
(ii) une source de bore notamment telle que précédemment définie ;
(iii) un sel de lithium notamment tel que précédemment défini ;
(iv) un filler notamment tel que précédemment défini ;
(v) de l'eau ;
(vi) du sable notamment tel que précédemment défini ; et
(vii) un granulat notamment tel que précédemment défini.

La composition de liant selon cette 3^{ème} forme de mise en oeuvre comprend essentiellement les 7 éléments précités et, de façon avantageuse, est constituée par ces éléments i.e. la composition selon l'invention ne comprend aucun autre élément que les 7 éléments précités. Dans ce cas, le liant est un béton.

Un exemple particulier de composition selon cette 3^{ème} forme de mise en oeuvre est une composition de béton constituée par :
(i) un ciment phosphomagnésien constitué par de l'oxyde de magnésium calciné entre 1000 et 1500°C, avec une surface spécifique inférieure à 1 m²/g et du dihydrogénophosphate de potassium ;
(ii) de l'acide borique ;
(iii) du nitrate de lithium ;
(iv) un filler composé de cendres volantes alumino-siliceuses ;
(v) de l'eau ;
(vi) du sable siliceux de granulométrie inférieure à 2 mm ; et
(vii) un granulat siliceux.

La présente invention concerne un procédé de préparation d'une composition de liant telle que précédemment définie.

Ce procédé comprend les étapes consistant à :
a) préparer un mélange comprenant l'eau notamment telle que précédemment définie, la source de bore notamment telle que précédemment définie, le sel de lithium notamment tel que précédemment défini, le ciment phosphomagnésien notamment tel que précédemment défini et le filler notamment tel que précédemment défini ; et
b) malaxer le mélange obtenu suite à l'étape (a).

De nombreuses variantes peuvent être envisagées pour l'étape (a) du procédé selon l'invention, toutes ces variantes sont un travail de routine pour l'homme du métier.

Ainsi, une 1^{ère} variante de l'étape (a) du procédé selon l'invention comprend les sous-étapes consistant à :
a₁) préparer un 1^{er} mélange comprenant l'eau notamment telle que précédemment définie, la source de bore notamment telle que précédemment définie et le sel de lithium notamment tel que précédemment défini ; et
a'₁) ajouter le ciment phosphomagnésien notamment tel que précédemment défini et le filler notamment tel que précédemment défini, au mélange préparé lors de l'étape (a₁).

Une 2^{nde} variante de l'étape (a) du procédé selon l'invention comprend les sous-étapes consistant à :
a₂) préparer un 1^{er} mélange comprenant la source de bore notamment telle que précédemment définie, le sel de lithium notamment tel que précédemment défini ; le ciment phosphomagnésien notamment tel que précédemment défini et le filler notamment tel que précédemment défini et
a'₂) ajouter l'eau notamment telle que précédemment définie, au mélange préparé lors de l'étape (a₂).

Le mélange lors de l'étape (a₂) peut notamment être un mélange à sec.

Une 3^{ème} variante de l'étape (a) du procédé selon l'invention comprend les sous-étapes consistant à :
a₃) préparer un 1^{er} mélange comprenant l'eau notamment telle que précédemment définie, la source de phosphate notamment telle que précédemment définie, la source de bore notamment telle que précédemment définie et le sel de lithium notamment tel que précédemment défini ; et
a'₃) ajouter la source de magnésium à l'état oxydé notamment telle que précédemment définie et le filler notamment tel que précédemment défini, au mélange préparé lors de l'étape (a₃).

Une 4^{ème} variante de l'étape (a) du procédé selon l'invention comprend les sous-étapes consistant à :
a₄) préparer un 1^{er} mélange comprenant l'eau notamment telle que précédemment définie et la source de phosphate notamment telle que précédemment définie ; et
a'₄) ajouter la source de magnésium à l'état oxydé notamment telle que précédemment définie, la source de bore notamment telle que précédemment définie, le sel de lithium notamment tel que précédemment défini et le filler notamment tel que précédemment défini, au mélange préparé lors de l'étape (a₄).

Lors des sous-étapes (a₁), (a₂), (a₃) et (a'₄) du procédé selon l'invention, la source de bore et le sel de lithium mis en oeuvre peuvent se présenter sous forme de poudre ou sous forme liquide. Ces étapes consistent donc à dissoudre ou à diluer la source de bore et le sel de lithium dans l'eau de gâchage (sous-étapes (a₁) et (a₃)) ou à mélanger à sec la source de bore et le sel de lithium avec les autres éléments secs (sous-étapes (a₂) et (a'₄)). Ces éléments sont avantageusement ajoutés l'un après l'autre dans l'eau ou dans le mélange sec (sel de lithium puis source de bore ou source de bore puis sel de lithium) ou sont ajoutés simultanément.

Lors des sous-étapes (a'₁), (a₂), (a₃), (a'₃), (a₄) et (a'₄) du procédé selon l'invention, le ciment phosphomagnésien et notamment la source de phosphate et la source de magnésium à l'état oxydé et le filler mis en oeuvre se présentent avantageusement sous forme de poudre. Ces éléments sont avantageusement ajoutés l'un après l'autre dans l'eau ou dans le mélange sec ou peuvent être, dans certains cas, ajoutés simultanément.

Le mélange et le malaxage dans le procédé selon l'invention est obtenu en mélangeant/malaxant les éléments présents lors de l'étape ou de la sous-étape concernée. L'homme du métier connaît différents types de mélangeur/malaxeur utilisables lors de ce mélange/malaxage tels qu'un malaxeur à coulis, un mélangeur Guedu, un malaxeur haute énergie ou un malaxeur à train valseur particulièrement adapté pour les bétons, et saura choisir, en fonction des éléments à mélanger ou à malaxer, le mélangeur/malaxeur le plus approprié.

Enfin, lorsque le liant selon l'invention est un mortier ou un béton, du sable tel que précédemment défini et éventuellement un granulat tel que précédemment défini peuvent être ajoutés lors de l'étape (a), suite à l'étape (a) ou suite à l'étape (b). Dans certaines formes de mise en oeuvre, cet ajout se fait une fois la source de phosphate, la source de magnésium à l'état oxydé et le filler déjà ajoutés. En variante, le sable et éventuellement le granulat peuvent être pré-mélangés avec le ciment.

Les différentes étapes de l'une quelconque des variantes du procédé selon l'invention sont réalisées à une température comprise entre 5 et 35°C et notamment à température ambiante (22°C±2°C).

La présente invention concerne en outre l'utilisation d'un liant de composition telle que précédemment définie ou susceptible d'être préparée par le procédé tel que précédemment défini, pour confiner des déchets et notamment des déchets nucléaires de faible et moyenne activité. Les déchets nucléaires susceptibles d'être confinés dans un liant selon l'invention sont avantageusement des déchets nucléaires contenant de l'aluminium métallique i.e. de l'aluminium à l'état d'oxydation 0. De tels déchets sont notamment issus du démantèlement d'anciennes installations nucléaires.

Cette utilisation consiste à enrober, à conditionner ou à piéger ces déchets dans un liant frais de composition telle que précédemment définie ou susceptible d'être préparée par le procédé tel que précédemment défini. Par « liant frais », on entend un liant présentant une plasticité permettant un tel enrobage ou piégeage. La notion de liant frais s'oppose à celle de liant durci.

Lorsque le liant est un coulis ou un mortier tel que précédemment défini, il est possible de mettre en oeuvre une vibration lors du confinement. En effet, une légère vibration peut être appliquée dans le cas où il existe un risque d'emprisonnement de bulles d'air dans le colis de déchets. Dans tous les cas, cette vibration ne devrait pas excéder 60 sec pour se prémunir de tout risque d'exsudation du coulis ou du mortier frais.

La présente invention concerne également un colis de déchets confinés dans un liant de composition telle que précédemment définie ou susceptible d'être préparée par le procédé tel que précédemment défini et conditionnés dans des fûts ou caissons notamment des fûts ou des caissons métalliques ou en béton. Selon cet aspect, le coulis ou le mortier de l'invention forme une enveloppe confinante entourant les déchets et notamment des déchets de faible et moyenne activité tels que précédemment définis i.e. des déchets nucléaires contenant de l'aluminium métallique.

En particulier, les coulis et les mortiers selon l'invention sont utilisés pour enrober les déchets ou pour les bloquer dans des containers, alors que les bétons selon l'invention servent principalement à fabriquer des containers de stockage.

### BRÈVE DESCRIPTION DES DESSINS

La Figure 1 présente la comparaison des productions d'hydrogène par corrosion d'un barreau d'aluminium enrobé dans différents matériaux cimentaires.
La Figure 2 présente l'échauffement et chaleur de réaction d'un mortier élaboré selon la présente invention (chaleur de réaction rapportée à la masse de MgO+KH₂PO₄).

### EXPOSÉ DÉTAILLÉ DE MODES DE RÉALISATION PARTICULIERS

### 1. Dégagement d'hydrogène lors de l'enrobage d'un barreau d'aluminium avec différents matériaux cimentaires.

Un barreau cylindrique d'aluminium (pureté de 99,99%) de diamètre 1 cm et de hauteur 3 cm est enrobé avec différents types de matériaux cimentaires dont les caractéristiques sont récapitulées dans le Tableau 1 ci-après.

Au préalable, le barreau d'aluminium est plongé pendant 30 s dans de l'acide sulfurique à 20%, puis rincé abondamment avec de l'eau déminéralisée et séché. Cette opération vise à éliminer toute couche passivante éventuelle à la surface du métal.

Le barreau d'aluminium est ensuite immergé dans 50 mL de matériau frais coulé dans un pot en polyéthylène, puis placé dans un réacteur métallique dont le couvercle est équipé d'un piquage qui permet une connexion à une pompe à vide, à un réseau d'alimentation d'azote ou à un chromatographe en phase gazeuse. Le pot est hermétiquement fermé. Une dépression est réalisée à l'aide d'une pompe à vide jusqu'à l'atteinte d'une pression de 150 mbar. De l'azote est ensuite introduit jusqu'à une pression de 750 mbar.

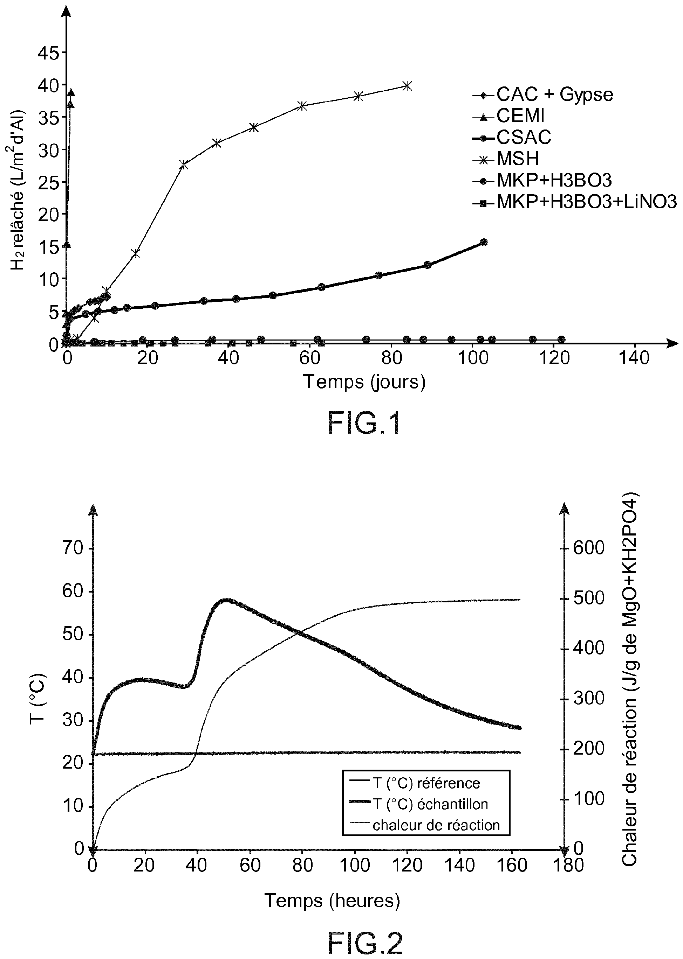

Le réacteur est conservé à température ambiante (22 ± 2°C) et des prélèvements de gaz sont régulièrement effectués pour l'analyse de l'hydrogène par chromatographie en phase gazeuse. La Figure 1 permet de comparer les productions d'hydrogène par les différents matériaux.

**Tableau 1 : Formulation des matériaux testés pour l'enrobage du barreau d'aluminium.**

| **Type de ciment** | **Composition** | **Type de matériau** | **E/C*** | **Remarque** |
|---|---|---|---|---|
| Portland (CEM I) | CEM I 52.5 PM ES CP2 Lafarge Le Teil | Pâte de ciment | 0,40 | Ciment Portland communément utilisé pour l'inertage de déchets |
| Ettringitique (CAC+gypse) | 67% Ciment alumineux Fondu (Kerneos) + 33% gypse (VWR) | Pâte de ciment | 0,48 | Liant du type de celui testé à Savannah River **[15]** |
| Ettringitique (CSAC) | Ciment sulfo-alumineux (75% clinker KTS100 de Belitex + 25% gypse VWR) | Pâte de ciment | 0,55 | Liant du type de ceux étudiés par Hayes *et al.* **[2]** |
| Silico-magnésien (MSH) | 20% MgO (MagChem 10 CR de M.A.F. Magnesite) + 5% hydroxycarbonate de magnésium 4MgCO₃.Mg(OH)₂.5H₂O (VWR) + 25% fumée de silice (Condensil S95 DM) + Acide borique (VWR) (2% par rapport à la masse de MgO + hydroxycarbonate de magnésium + SiO₂) + Plastifiant (BASF Glénium 51- 1% par rapport à la masse de MgO + hydroxycarbonate de magnésium + SiO₂) | Pâte de ciment | 0,35 | Liant du type de celui étudié par Zhang *et al.* **[17]** |
| Phosphomagnési en + acide borique (MKP+H₃BO₃) | MgO (MagChem 10 CR de M.A.F. Magnesite) + KH₂PO₄ (VWR) + cendres volantes alumino-siliceuses + acide borique (VWR) | Pâte de ciment | 0,51** | Liant du type de ceux développés par Wagh *et al.* **[8-14]** |
| | Rapport molaire Mg/P = 1 | | | |
| | Rapport molaire H₂O/Mg = 5 | | | |
| | Rapport molaire B/Mg = 0,057 | | | |
| Phosphomagnési en + acide borique + nitrate de lithium (MKP + H₃BO₃ + LiNO₃) | MgO (MagChem 10 CR de M.A.F. Magnesite) + KH₂PO₄ + cendres volantes alumino-siliceuses (CV)+ acide borique (VWR) + LiNO₃ (VWR) | Pâte de ciment | 0,51** | Présente invention |
| | Rapport molaire Mg/P = 1 | | | |
| | Rapport molaire H₂O/Mg = 5 | | | |
| | Rapport massique CV/(MgO+KH₂PO₄) = 1 | | | |
| | Rapport molaire B/Mg = 0,057 | | | |
| | Rapport molaire Li/Mg = 0,051 | | | |
| Phosphomagnési en + acide borique + nitrate de lithium (MKP + H₃BO₃ + LiNO₃) | MgO (MagChem 10 CR de M.A.F. Magnesite) + KH₂PO₄ (VWR) + cendres volantes alumino-siliceuses + acide borique (VWR) + LiNO₃ (VWR) + sable siliceux (Sifraco NE34) | Mortier | 0,55** | Présente invention |
| | Rapport molaire Mg/P = 1 | | | |
| | Rapport molaire H₂O/Mg = 5,4 | | | |
| | Rapport molaire B/Mg = 0,057 | | | |
| | Rapport molaire Li/Mg = 0,051 | | | |
| | Rapport massique CV/(MgO+KH₂PO₄) = 1 | | | |
| | Rapport massique sable / (MgO + KH₂PO₄) = 1 | | | |

| | | | | |
|---|---|---|---|---|
| * rapport massique eau / ciment ** rapport massique eau / (MgO+KH₂PO₄) | | | | |

Comme attendu, la production d'hydrogène à partir de l'enrobé de référence préparé à partir de ciment Portland est massive. L'essai a dû être interrompu après seulement un jour en raison de la trop forte teneur en hydrogène dans le réacteur.

Avec les ciments alumineux et sulfo-alumineux, le dégagement d'hydrogène est rapide pendant les premiers jours qui suivent le gâchage puis ralentit. Cependant, aucune stabilisation n'est observée sur la durée de l'étude. Une reprise de la production d'hydrogène se produit même après 60 j dans le cas du ciment sulfo-alumineux. Celle-ci est liée à l'épuisement du gypse dans la pâte cimentaire, qui s'accompagne d'une augmentation du pH de la solution interstitielle d'une unité (de 11 à 12 environ) et donc d'une augmentation de la vitesse de corrosion de l'aluminium.

Dans le cas du ciment silico-magnésien, le dégagement d'hydrogène reste faible pendant les 24 premières heures, mais augmente ensuite de façon importante. La limite de 4% d'hydrogène dans le ciel du réacteur est atteinte à l'échéance de 90 j.

Les meilleurs résultats sont obtenus avec le ciment phosphomagnésien. Avec les formulations existantes (courbe « MKP + H3BO3 » de la Figure 1), une faible production d'hydrogène est néanmoins détectée. L'extrapolation sur une année conduirait à une production de 0,026 L/(m².an). La présente invention permet d'améliorer ce résultat. Des barreaux d'aluminium ont été enrobés avec le mortier selon la présente invention, ou avec une formulation simplifiée par suppression du sable (pâte dont le ciment a même composition que le mortier, mêmes additifs, suppression du sable, et réduction de la teneur en eau pour prévenir le ressuage). Dans les deux cas, la teneur en hydrogène dans le ciel gazeux du réacteur reste inférieure à la limite de détection de la méthode d'analyse utilisée (0,01% de H₂) sur toute la durée de l'étude (courbe « MKP + H3BO3 + LiNO3 » de la Figure 1). Une extrapolation sur un an conduirait à une production d'hydrogène inférieure à 2.28.10⁻⁴ L/(m².an), c'est-à-dire réduite d'un facteur supérieur à 100 par rapport l'état de l'art.

### 2. pH de la solution interstitielle du mortier selon la présente invention.

Un mortier a été préparé selon la formulation décrite dans la dernière ligne du Tableau 1. Sa solution interstitielle a été extraite par pressage après 1 heure de conservation à 20°C dans un pot hermétiquement fermé. Le pH de la solution extraite a été mesuré avec une électrode de pH préalablement étalonnée entre 4 et 7. Une valeur de 5.0 a été obtenue. Ce résultat confirme que la présente invention permet d'obtenir un matériau dont le pH de la solution interstitielle au jeune âge est situé dans le domaine de passivation de l'aluminium.

### 3. Effet synergique de l'acide borique et du nitrate de lithium pour retarder la prise du ciment phosphomagnésien.

Pour évaluer l'influence des ajouts (acide borique et nitrate de lithium) sur la cinétique de réaction du liant, des essais ont été réalisés sur des formulations simplifiées constituées de pâtes de ciment. Par rapport au matériau décrit dans la présente invention, seul le sable a été supprimé.

Le temps de prise des matériaux a été évalué à l'aide d'un prisomètre Vicat automatique. Le Tableau 2 présente les différentes configurations testées et les résultats obtenus.

**Tableau 2 : Etude de l'influence du nitrate de lithium et de l'acide borique sur le temps de prise de pâtes de ciment phosphomagnésien.**

| **Constituants** et fournisseurs | Rapport molaire Mg/P | Rapport molaire H₂O/Mg | Rapport massique CV/(MgO +KH₂PO₄) | Rapport molaire B/Mg | Rapport molaire Li/Mg | Prise Vicat | |
|---|---|---|---|---|---|---|---|
| | | | | | | Début (min) | Fin (min) |
| **MgO** | | | | 0 | 0 | 40 (±5) | 70 (±5) |
| Magchem | | | | 0 | 0,051 | 35 (±5) | 70 (±5) |
| 10CR (M.A.F Magnesite) | | | | 0 | 0,102 | 30 (±5) | 70 (±5) |
| | | | | 0,057 | 0 | 250 (±15 ) | 1080 (±15) |
| **KH₂PO₄** (VWR) | 1 | 5 | 1 | | | | |
| **Cendres volantes AI-Si** | | | | 0,057 | 0,051 | 420 (±15) | 1260 (±15) |
| **H₃BO₃** (VWR) | | | | 0,057 | 0,102 | 690 (±15) | 2400 (±15) |
| **LiNO₃** (VWR) | | | | | | | |

Il apparaît que :
- utilisé seul, le nitrate de lithium n'a pas d'influence significative sur la prise du ciment phosphomagnésien dans le domaine de concentrations étudié,
- utilisé seul, l'acide borique retarde la prise du ciment phosphomagnésien dans le domaine de concentrations étudié,
- l'action retardatrice de l'acide borique est renforcée par l'ajout de nitrate de lithium.

Ce résultat souligne le caractère original de la présente invention, l'action synergique de l'acide nitrique et du borate de lithium ne pouvant être simplement déduite de l'influence de ces deux sels considérés séparément les uns des autres.

### 4. Propriétés d'un mortier élaboré selon la présente invention.

Un mortier a été préparé selon la formulation décrite dans la dernière ligne du Tableau 1 à l'aide d'un malaxeur normalisé de laboratoire conforme à la norme EN196 :1. Il a ensuite fait l'objet des caractérisations suivantes :
- mesure de l'eau exsudée aux échéances de 1 h, 3 h et 24 h par 100 mL d'enrobé introduit dans une éprouvette graduée et protégé de la dessiccation,
- évaluation de la fluidité par mesure du temps d'écoulement d'un litre de mortier à travers un cône de Marsh muni d'un ajutage 12,5 mm,
- mesure de l'échauffement de 1575 g de mortier placé dans un calorimètre semi-adiabatique de Langavant,
- mesure des temps de début et de fin de prise à l'aide d'un prisomètre Vicat automatique,
- mesure de la résistance à la compression d'éprouvettes 4 x 4 x 16 cm conservées pendant 28 j à température ambiante sous eau ou en sac.

Les résultats obtenus sont récapitulés dans le Tableau 3 et sur la Figure 2.

**Tableau 3 : Propriétés d'un mortier préparé selon la présente invention.**

| **Propriété** | **Résultat** |
|---|---|
| | 1h:0% |
| Eau exsudée | 3h:0% |
| | 24h:0% |
| Temps d'écoulement d'un litre de mortier au cône de Marsh | 80 s |
| Prise Vicat | Début : 4 h |
| | Fin:12h30 |
| Echauffement maximal en conditions semi-adiabatiques de Langavant | 35,7°C |
| Chaleur de réaction (J/g de MgO+KH₂PO₄) | 499 J/g |
| Résistance à la compression à 28 j (MPa) | Sac : *46 MPa* |
| | Eau : *36 MPa* |

Il apparaît que, outre sa capacité à limiter fortement la corrosion de l'aluminium, le mortier préparé selon la présente invention possède des caractéristiques favorables pour une application à l'immobilisation de déchets hétérogènes :
- il ne présente aucun ressuage,
- sa réactivité est maîtrisée (début de prise supérieur à 3 h, fin de prise inférieur à 24 h),
- sa fluidité permet un écoulement au cône de Marsh,
- son échauffement reste modéré (température maximale inférieure à 60°C dans les conditions semi-adiabatiques du test de Langavant),
- sa résistance à la compression excède largement la borne minimale requise de 20 MPa dès l'échéance de 28 j.

### RÉFÉRENCES

**[1]** Zhou et al, 2006, « An Alternative to Portland Cement for Waste Encapsulation - The Calcium Sulfoaluminate Cement System », J. Hazard. Mater., vol. 136, pages 120-129.
**[2]** Hayes et Godfrey, 2007, « Development of the Use of Alternative Cements for the Treatment of Intermediate Level Waste », Proc. Waste Management 2007 (WM'07) Conference, Tucson, USA.
**[3]** Glasser et Zhang, 1998, « Calculation of Chemical Water Demand for Hydration of Calcium Sulfoaluminate Cement », Proc. 4th International Symposium on Cement and Concrete, Shanghai, China, pages 38-44.
**[4]** Langton et al, 2011, « Use of Cementitious Materials for SRS Reactor Facility in-situ Decommissioning », Proc. Waste Management (WM'11) 2011 Conference, Phoenix, USA.
**[5]** Brevet US 4,756,762 au nom de American Stone-Mix, Inc., publié le 12 juillet 1988.
**[6]** Soudée et Pera, 2000, « Mechanism of setting reaction in magnesia-phosphate cements », Cem. Concr. Res., vol. 30, pages 315-321.
**[7]** Odler, 2000, « Special inorganic cements, Modern concrete technology series », Taylor&Francis, London, pages 216-224.
**[8]** Brevet US 5,645,518 au nom de University of Chicago, publié le 8 juillet 1997.
**[9]** Brevet US 6,133,498 au nom de US Department of Energy, publié le 17 octobre 2000.
**[10]** Demande internationale WO 97/34848 au nom de University of Chicago, publiée le 25 septembre 1997.
**[11]** Brevet US 5,846,894 au nom de University of Chicago, publié le 8 décembre 1998.
**[12]** Brevet US 6,153,809 au nom de US Department of Energy, publié le 28 novembre 2000.
**[13]** Demande internationale WO 2004/075207 au nom de University of Chicago, publiée le 2 septembre 2004.
**[14]** Wagh et al, 1997, « Stabilization of contaminated soil and wastewater with chemically bonded phosphate ceramics », Proc. Waste Management 1997 (WM'97), Tucson, USA.
**[15]** Langton et al, 2011, « Use of cementitious materials for SRS reactor facility in-situ decommissioning », Proc. Waste Management (WM'11) 2011 Conference, Phoenix, USA.
**[16]** Covill et al, 2011, « Development of magnesium phosphate cements for radioactive waste », Adv. Applied Ceramics, vol. 110, pages 151-156.
**[17]** Zhang et al, 2011, « Development of low pH Systems Forming Magnesium Silicate Hydrate (M-S-H) », Cem. Concr. Res., vol. 41, pages 439-442.
**[18]** Matsuo et al, 1995, « LiNO3 addition to prevent hydrogen gas generation from cement-solidified aluminium wastes », J. Nucl. Sci. Techn., vol. 32, pages 912-920.

## Revendications

1. Composition de liant comprenant :
(i) un ciment phosphomagnésien ;
(ii) une source de bore ;
(iii) un sel de lithium ; et
(iv) de l'eau.

2. Composition selon la revendication 1, **caractérisée en ce que** ledit ciment phosphomagnésien est constitué d'une source de magnésium à l'état oxydé et d'une source de phosphate.

3. Composition selon la revendication 2, **caractérisée en ce que** ladite source de magnésium à l'état oxydé est choisie dans le groupe constitué par l'oxyde de magnésium (MgO), l'hydroxyde de magnésium (Mg(OH)₂), le carbonate de magnésium (MgCO₃) l'hydroxycarbonate de magnésium (4MgCO₃.Mg(OH)₂.5H₂O) ou un de leurs mélanges.

4. Composition selon la revendication 2 ou 3, **caractérisée en ce que** ladite source de phosphate est choisie dans le groupe constitué par l'acide phosphorique, le phosphate d'aluminium, le phosphate de sodium, le phosphate de potassium, le monohydrogénophosphate d'aluminium, le monohydrogénophosphate de sodium, le monohydrogénophosphate de potassium, le dihydrogénophosphate d'aluminium, le dihydrogénophosphate de sodium, le dihydrogénophosphate de potassium ou un de leurs mélanges.

5. Composition selon l'une quelconque des revendications 1 à 4, **caractérisée en ce que** ladite source de bore est choisie dans le groupe constitué par l'acide borique, l'acide métaborique, le borax, un sel de borate, un sel de monohydrogénoborate, un sel de dihydrogénoborate, un sel de métaborate, un sel de polyborate ou un de leurs mélanges.

6. Composition selon l'une quelconque des revendications précédentes, **caractérisée en ce que** ledit sel de lithium est choisi dans le groupe constitué par le nitrate de lithium, le carbonate de lithium, le sulfate de lithium, le phosphate de lithium, le triazole de lithium, le borate de lithium, le monohydrogénoborate de lithium, le dihydrogénoborate de lithium, le métaborate de lithium, le polyborate de lithium ou un de leurs mélanges.

7. Composition selon l'une quelconque des revendications précédentes, **caractérisée en ce que** dans ladite composition :
- le rapport molaire entre les éléments Mg et P est compris entre 0,5 et 1,5 et, notamment, compris entre 0,8 et 1 ;
- le rapport molaire entre les éléments B et Mg est compris entre 0,03 et 0,3 et, notamment, compris entre 0,05 et 0,15 ;
- le rapport molaire entre les éléments Li et Mg compris entre 0,02 et 0,12 et, notamment, compris entre 0,05 et 0,10, et
- le rapport molaire entre l'eau et l'élément Mg compris entre 4 et 7 et, notamment, compris entre 5 et 6.

8. Composition selon l'une quelconque des revendications précédentes, **caractérisée en ce que** ladite composition comprend un filler.

9. Composition selon la revendication 8, **caractérisée en ce que** ledit filler est un filler siliceux et notamment alumino-siliceux et, plus particulièrement, un filler, naturel ou non, issu de pouzzolane, d'illite, d'opaline, de cherts, de cendres volcaniques, de pierre ponce, d'argiles schisteuses, de terres à diatomées calcinées, d'argile cuite, de fumée de silice ou de cendres volantes.

10. Composition selon l'une quelconque des revendications précédentes, **caractérisée en ce que** ladite composition comprend en outre du sable et, éventuellement, des granulats.

11. Composition selon l'une quelconque des revendications précédentes, **caractérisée en ce que** ladite composition est choisie parmi :
- une composition de coulis constituée par :
(i) un ciment phosphomagnésien constitué par de l'oxyde de magnésium calciné entre 1000 et 1500°C, avec une surface spécifique inférieure à 1 m²/g et du dihydrogénophosphate de potassium ;
(ii) de l'acide borique ;
(iii) du nitrate de lithium ;
(iv) un filler composé de cendres volantes alumino-siliceuses ; et
(v) de l'eau ;
- une composition de mortier constituée par :
(i) un ciment phosphomagnésien constitué par de l'oxyde de magnésium calciné entre 1000 et 1500°C, avec une surface spécifique inférieure à 1 m²/g et du dihydrogénophosphate de potassium ;
(ii) de l'acide borique ;
(iii) du nitrate de lithium ;
(iv) un filler composé de cendres volantes alumino-siliceuses ;
(v) de l'eau ; et
(vi) du sable siliceux de granulométrie inférieure à 2 mm ; et
- une composition de béton constituée par :
(i) un ciment phosphomagnésien constitué par de l'oxyde de magnésium calciné entre 1000 et 1500°C, avec une surface spécifique inférieure à 1 m²/g et du dihydrogénophosphate de potassium ;
(ii) de l'acide borique ;
(iii) du nitrate de lithium ;
(iv) un filler composé de cendres volantes alumino-siliceuses ;
(v) de l'eau ;
(vi) sable siliceux de granulométrie inférieure à 2 mm ; et
(vii) un granulat siliceux.

12. Procédé de préparation d'une composition de liant selon l'une quelconque des revendications 8 à 11, comprenant les étapes consistant à :
a) préparer un mélange comprenant l'eau, la source de bore, le sel de lithium, le ciment phosphomagnésien et le filler; et
b) malaxer le mélange obtenu suite à ladite étape (a).

13. Procédé selon la revendication 12, **caractérisé en ce que** du sable et éventuellement un granulat sont ajoutés lors de ladite étape (a), suite à ladite étape (a) ou suite à ladite étape (b).

14. Utilisation d'un liant de composition telle que définie à l'une quelconque des revendications 1 à 11 ou susceptible d'être préparée par le procédé tel que défini à la revendication 12 ou 13, pour confiner des déchets et avantageusement des déchets nucléaires contenant de l'aluminium métallique.

15. Colis de déchets confinés dans un liant de composition telle que définie à l'une quelconque des revendications 1 à 11 ou susceptible d'être préparée par le procédé tel que défini à la revendication 12 ou 13, et conditionnés dans des fûts ou caissons.

## Patentansprüche

1. Bindemittel-Zusammensetzung, umfassend:
(i) einen Phosphomagnesium-Zement;
(ii) eine Borquelle;
(iii) ein Lithiumsalz; und
(iv) Wasser.

2. Zusammensetzung nach Anspruch 1, **dadurch gekennzeichnet, dass** der Phosphomagnesium-Zement mit einer Quelle von Magnesium im oxidierten Zustand und einer Phosphatquelle gebildet ist.

3. Zusammensetzung nach Anspruch 2, **dadurch gekennzeichnet, dass** die Quelle von Magnesium im oxidierten Zustand ausgewählt ist aus der Gruppe gebildet durch Magnesiumoxid (MgO), Magnesiumhydroxyd (Mg(OH)₂), Magnesiumcarbonat (MgCO₃), Magnesiumhydroxycarbonat (4MgCO₃.Mg(OH)₂.5H₂O) oder eine ihrer Mischungen.

4. Zusammensetzung nach Anspruch 2 oder 3, **dadurch gekennzeichnet, dass** die Phosphatquelle ausgewählt ist aus der Gruppe gebildet durch Phosphorsäure, Aluminiumphosphat, Natriumphosphat, Kaliumphosphat, Aluminiummonohydrogenphosphat, Natriummonohydrogenphosphat, Kaliummonohydrogenphosphat, Aluminiumdihydrogenphosphat, Natriumdihydrogenphosphat, Kaliumdihydrogenphosphat oder eine ihrer Mischungen.

5. Zusammensetzung nach einem der Ansprüche 1 bis 4, **dadurch gekennzeichnet, dass** die Borquelle ausgewählt ist aus der Gruppe gebildet durch Borsäure, Metaborsäure, Borax, ein Boratsalz, ein Monohydrogenboratsalz, ein Dihydrogenboratsalz, ein Metaboratsalz, ein Polyboratsalz oder eine ihrer Mischungen.

6. Zusammensetzung nach einem der vorhergehenden Ansprüche, **dadurch gekennzeichnet, dass** das Lithiumsalz ausgewählt ist aus der Gruppe gebildet durch Lithiumnitrat, Lithiumcarbonat, Lithiumsulfat, Lithiumphosphat, Lithiumtriazol, Lithiumborat, Lithiummonohydrogenborat, Lithiumdihydrogenborat, Lithiummetaborat, Lithiumpolyborat oder eine ihrer Mischungen.

7. Zusammensetzung nach einem der vorhergehenden Ansprüche, **dadurch gekennzeichnet, dass** in der Zusammensetzung:
- das molare Verhältnis zwischen den Elementen Mg und P zwischen 0,5 und 1,5 enthalten ist und insbesondere zwischen 0,8 und 1 enthalten ist;
- das molare Verhältnis zwischen den Elementen B und Mg zwischen 0,03 und 0,3 enthalten ist und insbesondere zwischen 0,05 und 0,15 enthalten ist;
- das molare Verhältnis zwischen den Elementen Li und Mg zwischen 0,02 und 0,12 enthalten ist und insbesondere zwischen 0,05 und 0,10 enthalten ist, und
- das molare Verhältnis zwischen Wasser und dem Element Mg zwischen 4 und 7 enthalten ist und insbesondere zwischen 5 und 6 enthalten ist.

8. Zusammensetzung nach einem der vorhergehenden Ansprüche, **dadurch gekennzeichnet, dass** die Zusammensetzung einen Füllstoff umfasst.

9. Zusammensetzung nach Anspruch 8, **dadurch gekennzeichnet, dass** der Füllstoff ein Siliziumoxidfüllstoff und insbesondere ein aluminiumsiliziumoxidhaltiger Füllstoff ist und speziell ein natürlicher oder nichtnatürlicher Füllstoff auf Basis von Puzzolan, Illit, Opalin, Cherts, Vulkanaschen, Bimsstein, Schiefertonen, Kalkdiatomeen, gebranntem Ton, Silicastaub oder Flugaschen.

10. Zusammensetzung nach einem der vorhergehenden Ansprüche, **dadurch gekennzeichnet, dass** die Zusammensetzung ferner Sand und gegebenenfalls Granulate enthält.

11. Zusammensetzung nach einem der vorhergehenden Ansprüche, **dadurch gekennzeichnet, dass** die Zusammensetzung ausgewählt ist aus:
- einer Zusammensetzung von Massen, gebildet durch
(i) ein Phosphomagnesium-Zement, gebildet durch Magnesiumoxid, das zwischen 1000 und 1500°C kalziniert ist, mit einer spezifischen Oberfläche kleiner als 1m²/g und Kaliumdihydrogenphosphat;
(ii) Borsäure;
(iii) Lithiumnitrat;
(iv) ein Füllstoff, gebildet mit aluminiumsiliziumoxidhaltigen Flugaschen; und
(v) Wasser;
- einer Mörtelzusammensetzung, gebildet durch:
(i) ein Phosphomagnesium-Zement, gebildet durch Magnesiumoxid, das zwischen 1000 und 1500°C kalziniert ist, mit einer spezifischen Oberfläche kleiner als 1m²/g und Kaliumdihydrogenphosphat;
(ii) Borsäure;
(iii) Lithiumnitrat;
(iv) ein Füllstoff, gebildet mit aluminiumsiliziumoxidhaltigen Flugaschen; und
(v) Wasser; und
(vi) siliziumoxidhaltigem Sand mit einer Korngröße kleiner als 2 mm; und
- einer Betonzusammensetzung, gebildet durch:
(i) ein Phosphomagnesium-Zement, gebildet durch Magnesiumoxid, das zwischen 1000 und 1500°C kalziniert ist, mit einer spezifischen Oberfläche kleiner als 1 m²/g und Kaliumdihydrogenphosphat;
(ii) Borsäure;
(iii) Lithiumnitrat;
(iv) ein Füllstoff, der mit aluminiumsiliziumoxidhaltigen Flugaschen gebildet ist;
(v) Wasser;
(vi) siliziumoxidhaltiger Sand mit einer Korngröße kleiner als 2 mm; und
(vii) ein siliziumoxidhaltiges Granulat.

12. Verfahren zur Herstellung einer Bindemittelzusammensetzung nach einem der Ansprüche 8 bis 11, umfassend die folgenden Schritte:
a) Herstellen einer Mischung, die das Wasser, die Borquelle, das Lithiumsalz, den Phosphomagnesium-Zement und den Füllstoff enthält; und
b) Kneten der als Folge des Schritts (a) erhaltenen Mischung.

13. Verfahren nach Anspruch 12, **dadurch gekennzeichnet, dass** Sand und gegebenenfalls ein Granulat während des Schritts (a), in Anschluss an den Schritt (a) oder in Anschluss an den Schritt (b) hinzugefügt werden.

14. Verwendung eines Bindemittels mit einer Zusammensetzung wie in einem der Ansprüche 1 bis 11 definiert, oder das herstellbar ist durch das Verfahren wie in Anspruch 12 oder 13 definiert, zum Einschließen von Abfällen und vorzugsweise von nuklearen Abfällen, die metallisches Aluminium enthalten.

15. Gebinde von Abfällen, die eingeschlossen sind in einem Bindemittel, mit einer Zusammensetzung wie in einem der Ansprüche 1 bis 11 definiert oder das herstellbar ist durch das Verfahren wie in Anspruch 12 oder 13 definiert, und in Fässern oder Kisten konditioniert sind.

## Claims

1. A binder composition comprising:
(i) a phospho-magnesium cement;
(ii) a boron source;
(iii) a lithium salt; and
(iv) water.

2. The composition according to claim 1, **characterized in that** said phospho-magnesium cement consists of a magnesium source in the oxidized state and of a phosphate source.

3. The composition according to claim 2, **characterized in that** said magnesium source in the oxidized state is selected from the group consisting of magnesium oxide (MgO), magnesium hydroxide (Mg(OH)₂), magnesium carbonate (MgCO₃), magnesium hydroxycarbonate (4MgCO₃.Mg(OH)₂.5H₂O) and one of their mixtures.

4. The composition according to claim 2 or 3, **characterized in that** said phosphate source is selected from the group consisting of phosphoric acid, aluminium phosphate, sodium phosphate, potassium phosphate, aluminium monohydrogenphosphate, sodium monohydrogenphosphate, potassium monohydrogenphosphate, aluminium dihydrogenphosphate, sodium dihydrogenphosphate, potassium dihydrogenphosphate and one of their mixtures.

5. The composition according to any of claims 1 to 4, **characterized in that** said boron source is selected from the group consisting of boric acid, metaboric acid, borax, a borate salt, a monohydrogenborate salt, a dihydrogenborate salt, a metaborate salt, a polyborate salt and one of their mixtures.

6. The composition according to any of the preceding claims, **characterized in that** said lithium salt is selected from the group consisting of lithium nitrate, lithium carbonate, lithium sulfate, lithium phosphate, lithium triazole, lithium borate, lithium monohydrogenborate, lithium dihydrogenborate, lithium metaborate, lithium polyborate and one of their mixtures.

7. The composition according to any of the preceding claims, **characterized in that** in said composition:
- the molar ratio between the elements Mg and P is comprised between 0.5 and 1.5 and notably comprised between 0.8 and 1;
- the molar ratio between the elements B and Mg is comprised between 0.03 and 0.3 and notably comprised between 0.05 and 0.15;
- the molar ratio between the elements Li and Mg is comprised between 0.02 and 0.12 and notably comprised between 0.05 and 0.10, and
- the molar ratio between water and the element Mg is comprised between 4 and 7 and notably comprised between 5 and 6.

8. The composition according to any of the preceding claims, **characterized in that** said composition comprises a filler.

9. The composition according to claim 8, **characterized in that** said filter is a siliceous filler and notably alumino-siliceous filler and more particularly a filler, either natural or not, stemming from pozzolan, illite, opaline, cherts, volcanic ashes, pumice stone, schistous clays, calcined diatomaceous earths, baked clay, silica fume or flying ashes.

10. The composition according to any of the preceding claims, **characterized in that** said composition further comprises sand and optionally granulates.

11. The composition according to any of the preceding claims, **characterized in that** said composition is selected from among:
- a grout composition consisting of:
(i) a phospho-magnesium cement formed with magnesium oxide calcined between 1,000 and 1,500°C, with a specific surface area of less than 1 m²/g and with potassium dihydrogenphosphate;
(ii) boric acid;
(iii) lithium nitrate;
(iv) a filler consisting of alumino-siliceous flying ashes; and
(v) water;
- a mortar composition consisting of:
(i) a phospho-magnesium cement formed with magnesium oxide calcined between 1,000 and 1,500°C, with a specific surface area of less than 1 m²/g and with potassium dihydrogenphosphate;
(ii) boric acid;
(iii) lithium nitrate;
(iv) a filler consisting of alumino-siliceous flying ashes;
(v) water; and
(vi) siliceous sand with a grain size of less than 2 mm; and
- a concrete composition consisting of:
(i) a phospho-magnesium cement formed with magnesium oxide calcined between 1,000 and 1,500°C, with a specific surface area of less than 1 m²/g and with potassium dihydrogenphosphate;
(ii) boric acid;
(iii) lithium nitrate;
(iv) a filler consisting of alumino-siliceous flying ashes;
(v) water;
(vi) siliceous sand with a grain size of less than 2 mm; and
(vii) a siliceous granulate.

12. A method for preparing a binder composition according to any of claims 8 to 11, comprising the steps of:
a) preparing a mixture comprising the water, the boron source, the lithium salt, the phosphorus-magnesium cement and the filler; and
b) kneading the obtained mixture subsequently to said step (a).

13. The method according to claim 12, **characterized in that** sand and optionally granulates are added during said step (a), subsequent to said step (a) or subsequent to said step (b).

14. The use of a binder of a composition as defined in any of claims 1 to 11 or which may be prepared by the method as defined in claim 12 or 13 for confining wastes and advantageously nuclear wastes containing aluminium metal.

15. Packages of wastes confined in a binder with a composition as defined in any of claims 1 to 11 or which may be prepared by the method as defined in claim 12 or 13 and conditioned in barrels or caissons.
